# EUROPEAN PATENT APPLICATION

(11) **EP 4 760 530 A1**
(43) Date of publication of application: **17.06.2026**
(21) Application number: 24851841.7
(22) Date of filing: 06.08.2024
(51) Int. Cl.: G06F 16/28, G06Q 10/06

(54) **PROBLEM SOLVING SUPPORT DEVICE AND PROBLEM SOLVING SUPPORT METHOD**

(30) Priority: 08.08.2023 JP 2023129422
(71) Applicant: OMRON Corporation, Kyoto-shi, Kyoto 600-8530 (JP)
(72) Inventor: EGAMI, Shin, Kyoto-shi, Kyoto 600-8530 (JP); NAMOSE, Isamu, Kyoto-shi, Kyoto 600-8530 (JP)
(74) Representative: Marks & Clerk LLP
(86) International application number: PCT/JP2024/028053
(87) International publication number: WO 2025/033417

(57) **Abstract**

To provide a problem solving support device that can propose a purposeful solution for a client problem. A problem solving support device 1 includes a storage unit that stores at least a first tree structure composed of a plurality of first nodes that store data related to a problem and a second tree structure composed of a plurality of second nodes that store data related to a solution, a first allocation unit that compares each of the plurality of first nodes included in the first tree structure with target data, calculates a first weighting factor based on a similarity with the target data for each of the plurality of first nodes, and allocates the calculated first weighting factor to the corresponding one of the plurality of first nodes, and a second allocation unit that allocates a second weighting factor based on the first weighting factor to each of the plurality of second nodes included in the second tree structure, based on a degree of association representing strength of association determined between same-level nodes located at the same level in the first tree structure and the second tree structure.

## Description

### TECHNICAL FIELD

The present invention relates to a problem solving support device and a problem solving support method.

### BACKGROUND OF INVENTION

Patent Literature 1 below discloses a knowledge information creation support device for reducing a burden of creating knowledge information such as FAQs created from past interaction histories with clients. This support device extracts only utterances containing information as questions from a large volume of past interaction logs, groups similar utterances (questions) together, and creates FAQs.

### CITATION LIST

### PATENT LITERATURE

Patent Literature 1: JP 2021-157534 A

### SUMMARY

### TECHNICAL PROBLEM

Meanwhile, problems including client needs and the like are diverse, and solutions to those problems are also diverse. Therefore, when proposing solutions to problems to clients, it is desirable to propose solutions that are appropriate for the problems.

The support system described in Patent Literature 1 is limited to creating FAQs based on questions in the interaction logs, and is insufficient as a mechanism for proposing solutions to problems, leaving room for improvement.

An object of the present invention is to provide a problem solving support device and a problem solving support method that are capable of proposing purposeful solutions to client problems.

### SOLUTION TO PROBLEM

A problem solving support device according to an aspect of the present invention includes a storage unit that stores at least a first tree structure composed of a plurality of first nodes storing data related to a problem and a second tree structure composed of a plurality of second nodes storing data related to a solution, a first allocation unit that compares each of the plurality of first nodes included in the first tree structure with target data, calculates a first weighting factor based on a similarity with the target data for each of the plurality of first nodes, and allocates the first weighting factor calculated to the corresponding one of the plurality of first nodes, and a second allocation unit that allocates a second weighting factor based on the first weighting factor to each of the plurality of second nodes included in the second tree structure, based on a degree of association representing strength of association determined between same-level nodes located at the same level in the first tree structure and the second tree structure.

According to this aspect, each of the plurality of first nodes in the first tree structure related to the problem is compared with the target data for which the solution is proposed, the first weighting factor based on the similarity with the target data is allocated to each of the plurality of first nodes, and the second weighting factor based on the first weighting factor is allocated to each of the plurality of second nodes in the second tree structure, based on the degree of association between the same-level nodes in the first tree structure and the second tree structure related to the solution. This enables to allocate the weighting factors based on the similarity with the target data for which a solution is proposed to the respective nodes in the problem solving structure composed of the first tree structure and the second tree structure, identify nodes having a high degree of association with the target data from the problem solving structure, and propose the nodes as a solution.

In the aspect described above, the second allocation unit may allocate the second weighting factor based on the first weighting factor to each of the plurality of second nodes included in the second tree structure, based on a degree of association representing strength of association determined between each of first lowest level nodes located at the lowest level in the first tree structure and each of second lowest level nodes located at the lowest level in the second tree structure.

According to this aspect, it is possible to identify the second node having a high degree of association with the first node, based on the degree of association between the lowest level nodes in the first tree structure and the second tree structure constituting the problem solving structure.

In the aspect described above, the second allocation unit may calculate the second weighting factor for each of the same-level nodes in the second tree structure using the degree of association, and may calculate the second weighting factor sequentially from a lower level for each of plurality of second nodes located above the same-level nodes in the second tree structure using the second weighting factor calculated.

According to this aspect, it is possible to reflect the degree of association between the target data for which a solution is proposed and the first node at a specific level in the first tree structure on the second node at the specific level in the second tree structure, and to sequentially reflect the degree of association from the lower level to the second nodes located at the higher level in the reflected second node.

In the aspect described above, the problem solving support device may further include a first vector conversion unit that converts the target data into a first vector being a sequence of vectors, and a second vector conversion unit that converts data stored in each of the plurality of first nodes into a second vector being a sequence of vectors, and the first allocation unit may calculate the similarity using the first vector and the second vector.

According to this aspect, it is possible to calculate the similarity between the target data for which a solution is proposed and the data stored in each of the plurality of first nodes using the vectors representing the respective features.

In the aspect described above, the similarity may be represented by a third vector being a sequence of vectors, and the first allocation unit may calculate the first weighting factor using a vector included in the third vector.

According to this aspect, it is possible to calculate the first weighting factor between the target data for which a solution is proposed and each of the plurality of first nodes using the similarity represented by a vector.

In the aspect described above, the problem solving support device may further include a presentation unit that presents at least a portion of the first tree structure composed of the plurality of first nodes, each of the plurality of first nodes having the first weighting factor allocated by the first allocation unit, and the second tree structure composed of the plurality of second nodes, each of the plurality of second nodes having the second weighting factor allocated by the second allocation unit, as an inference result for the target data.

According to this aspect, it is possible to present a solution to a problem included in target data using the nodes in the first tree structure and the second tree structure to which weighting factors based on the degree of association with the target data for which a solution is proposed are allocated.

In the aspect described above, each of the plurality of first nodes and each of the plurality of second nodes may further include attribute data representing attributes of data to be stored, the problem solving support device may further include a reception unit that receives input of the attribute data, and the presentation unit may present the first node and the second node corresponding to the input attribute data among the plurality of first nodes and the plurality of second nodes, as the inference result.

According to this aspect, it is possible to present a problem and a solution that match the specified attribute data.

In the aspect described above, when presenting the first node and the second node as the inference result, the presentation unit may present the first node to be presented in association with the second node that is in a hierarchical relationship with the same-level nodes in the second tree structure that have a high degree of association with the same-level nodes in the first tree structure that are in a hierarchical relationship with the first node.

According to this aspect, it is possible to present a solution having a high degree of association to a problem included in the target data for which a solution is proposed, organized in a hierarchically associated format.

In the aspect described above, the second allocation unit may use a fully connected layer when calculating the second weighting factor by associating each of the same-level nodes in the first tree structure with each of the same-level nodes in the second tree structure.

According to this aspect, the first tree structure and the second tree structure can be associated with each other using a fully connected layer.

A problem solving support method according to another aspect of the present invention is a method executed by a processor and includes storing at least a first tree structure composed of a plurality of first nodes storing data related to a problem and a second tree structure composed of a plurality of second nodes storing data related to a solution, comparing each of the plurality of first nodes included in the first tree structure with target data, calculating a first weighting factor based on a similarity with the target data for each of the plurality of first nodes, and allocating the calculated first weighting factor to the corresponding one of the plurality of first nodes, and allocating a second weighting factor based on the first weighting factor to each of the plurality of second nodes included in the second tree structure, based on a degree of association representing strength of association determined between same-level nodes located at the same level in the first tree structure and the second tree structure.

According to this aspect, each of the plurality of first nodes in the first tree structure related to the problem is compared with the target data for which the solution is proposed, the first weighting factor based on the similarity with the target data is allocated to each of the plurality of first nodes, and the second weighting factor based on the first weighting factor is allocated to each of the plurality of second nodes in the second tree structure, based on the degree of association between the same-level nodes in the first tree structure and the second tree structure related to the solution. This enables to allocate the weighting factors based on the similarity with the target data for which a solution is proposed to the respective nodes in the problem solving structure composed of the first tree structure and the second tree structure, identify nodes having a high degree of association with the target data from the problem solving structure, and propose the nodes as a solution.

### ADVANTAGEOUS EFFECTS OF INVENTION

According to the present invention, it is possible to provide a problem solving support device and a problem solving support method that are capable of proposing purposeful solutions to client problems.

### BRIEF DESCRIPTION OF THE DRAWINGS

FIG. 1 is a block diagram illustrating a configuration of a problem solving support device according to an embodiment.
FIG. 2 is a conceptual diagram illustrating a function as a first vector conversion unit.
FIG. 3 is a conceptual diagram illustrating a function as a second vector conversion unit.
FIG. 4 is a conceptual diagram illustrating a function as a first allocation unit.
FIG. 5 is a conceptual diagram illustrating the function as the first allocation unit.
FIG. 6 is a conceptual diagram illustrating a function as a second allocation unit.
FIG. 7 is a conceptual diagram illustrating the function as the second allocation unit.
FIG. 8 is a conceptual diagram illustrating the function as the second allocation unit.
FIG. 9 is a conceptual diagram illustrating a function as a presentation unit.
FIG. 10 is a conceptual diagram illustrating the function as the presentation unit.
FIG. 11 is a conceptual diagram illustrating the function as the presentation unit.
FIG. 12 is a flowchart illustrating operation of the problem solving support device according to the embodiment.

### DESCRIPTION OF EMBODIMENTS

A preferred embodiment of the present invention will be described with reference to the attached drawings. In the drawings, components denoted by the same reference signs have the same or similar configurations. However, the drawings are schematic, and specific dimensions and the like are to be determined in light of the following description. It goes without saying that different drawings also include parts with dimensional relationships and proportions different from one another.

### Configuration of Problem Solving Support Device

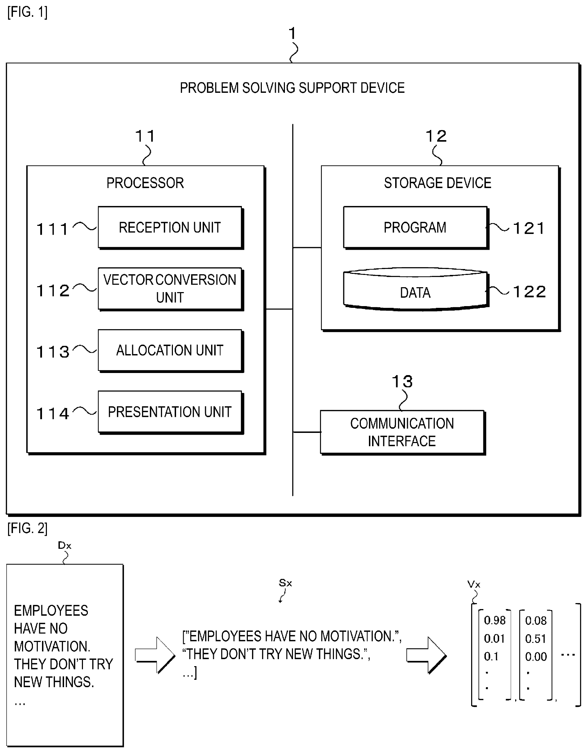

With reference to FIG. 1, an example of a configuration of a problem solving support device 1 according to the embodiment will be described. The problem solving support device 1 includes, for example, a processor 11, a storage device 12, and a communication interface 13 as physical components.

The processor 11 is, for example, a central processing unit (CPU) or a micro processing unit (MPU). The processor 11 executes a program 121 stored in the storage device 12 to implement various functions described below.

The storage device 12 is a computer-readable recording medium such as a disk drive or a semiconductor memory. The storage device 12 functions as a storage unit that stores the program 121 for implementing the various functions of the problem solving support device 1, various data 122 used by the program 121, and the like.

The various data 122 includes, for example, data related to problems and data related to solutions. The data related to problems and the data related to solutions are each assumed to relate to a common specific event. Examples of the specific event include events such as personnel affairs and factory automation (FA).

For example, when data related to problems relates to personnel affairs, data related to solutions also relates to personnel affairs. In this example, it is preferable to separate the data by tagging or categorizing the data so that the data related to problems and the data related to solutions do not contain data related to events other than personnel affairs (e.g., FA).

The data related to problems and the data related to solutions can be managed using tree structures composed of a plurality of nodes. As the tree structure, for example, a first tree structure composed of a plurality of first nodes that store data related to problems and a second tree structure composed of a plurality of second nodes that store data related to solutions can be provided.

Note that the number of tree structures used for management is not limited to two, and three or more types may be provided. For example, in a case of three types, a first tree structure related to why, a second tree structure related to what, and a third tree structure related to how may be provided. In a case of five types, a first tree structure related to requirements, a second tree structure related to target values, a third tree structure related to objects, a fourth tree structure related to actions, and a fifth tree structure related to means may be provided.

The first nodes and the second nodes each may further include attribute data representing attributes of data to be stored. For example, when a field to be supported is consulting of personnel affairs, the attribute data preferably includes a position and a department handling that data.

Note that in the present embodiment, for convenience of description, a case where data stored in each node is customized for consulting personnel affairs is described, but the data to be customized is not limited to being for consulting personnel affairs. For example, the data to be customized may be for consulting FA, and can be applied to any event for which consulting is possible.

The communication interface 13 connects to a network and functions as a communication unit that communicates with other devices on the network.

The problem solving support device 1 includes, for example, a reception unit 111, a vector conversion unit 112, an allocation unit 113, and a presentation unit 114 as functional components that implement various functions. Each of these will be described below.

### Reception Unit 111

The reception unit 111 receives input of attribute data such as a position and a department. The attribute data can be input, for example, by a user of the problem solving support device 1 operating an input device. The input device may be provided in the problem solving support device 1 or may be connected to the problem solving support device 1 via a network.

### Vector Conversion Unit 112

The vector conversion unit 112 has (1-1) a function as a first vector conversion unit and (1-2) a function as a second vector conversion unit. The functions each will be described below.

### (1-1) Function as First Vector Conversion Unit:

The function as the first vector conversion unit is a function of converting target data for which a solution is proposed into a first vector that is a sequence of vectors. As the target data, for example, textual information such as meeting minutes containing contents that may be a problem, or voice of client (VOC) can be used.

Note that the target data is not limited to textual information. For example, images or videos may be used as the target data. In this case, it is preferable to extract characteristic elements from the images or videos and convert the characteristic elements into textual information.

The function as the first vector conversion unit will be described in detail with reference to FIG. 2.

First, as illustrated in FIG. 2, it is assumed that textual information such as "Employees have no motivation. They don't try new things...." is input as target data Dx for which a solution is proposed.

Subsequently, the vector conversion unit 112 segments sentences included in the target data Dx using, for example, morphological analysis or a rule base. In FIG. 2, for example, segmented sentences Sx, ["Employees have no motivation.", "They don't try new things." ...] are displayed.

Subsequently, the vector conversion unit 112 inputs the segmented sentences Sx to a natural language processing (NLP) model such as bidirectional encoder representations from transformers (Bert), and defines sequences of vectors output from that model as a first vector Vx.

In FIG. 2, for example, a sequence of vectors [0.98 0.01 0.1 · ·] output when "Employees have no motivation." is input to the model, and a sequence of vectors [0.08 0.51 0.00 · ·] output when "They don't try new things." is input to the model are displayed as the first vector Vx.

### (1-2) Function as Second Vector Conversion Unit:

The function as the second vector conversion unit is a function of converting data stored in the first nodes constituting the first tree structure into second vectors that are sequences of vectors, respectively.

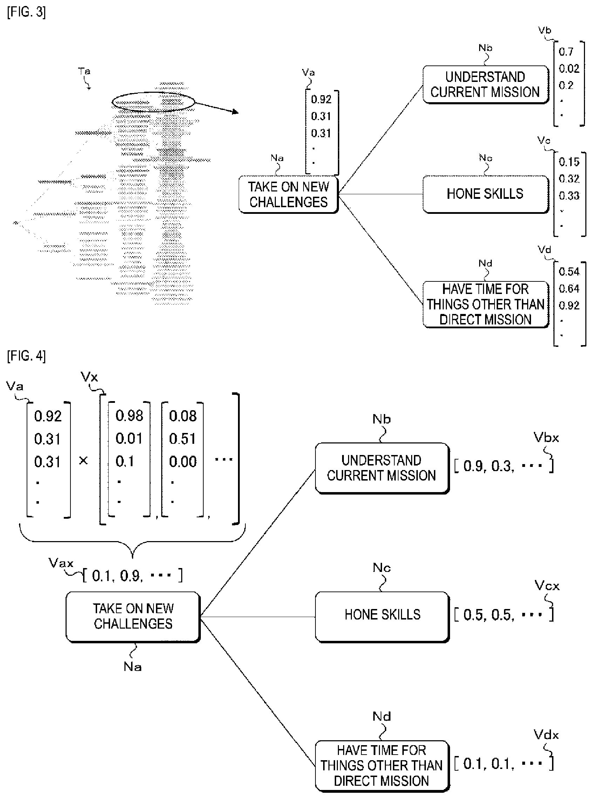

The function as the second vector conversion unit will be described in detail with reference to FIG. 3. For convenience of description, four first nodes Na, Nb, Nc, and Nd of a first node group constituting a first tree structure Ta illustrated in FIG. 3 will be used for description.

The vector conversion unit 112 inputs data stored in each of the first nodes Na, Nb, Nc, and Nd into a natural language processing model such as Bert, and defines sequences of vectors output from the model as second vectors Va, Vb, Vc, and Vd.

In FIG. 3, for example, a sequence of vectors [0.92 0.31 0.31 · ·] output when "Take on new challenges" stored in the first node Na is input into the model is displayed as the second vector Va, and a sequence of vectors [0.7 0.02 0.2 · ·] output when "Understand current mission" stored in the first node Nb is input into the model is displayed as the second vector Vb.

Similarly, a sequence of vectors [0.15 0.32 0.33 · ·] output when "Hone skills" stored in the first node Nc is input into the model is displayed as the second vector Vc, and a sequence of vectors [0.54 0.64 0.92 · ·] output when "Have time for things other than a direct mission" stored in the first node Nd is input into the model is displayed as the second vector Vd.

The vector conversion unit 112 calculates second vectors each corresponding to other first nodes included in the first tree structure Ta in a manner similar to the above.

### Allocation Unit 113

The description returns to FIG. 1. The allocation unit 113 has (2-1) a function as a first allocation unit and (2-2) a function as a second allocation unit. The functions each will be described below.

### (2-1) Function as First Allocation Unit:

The function as the first allocation unit is a function of comparing each of the first nodes included in the first tree structure with the target data Dx, calculating a first weighting factor based on a similarity with the target data Dx for each of the first nodes, and allocating the calculated first weighting factor to the first node used for the calculation.

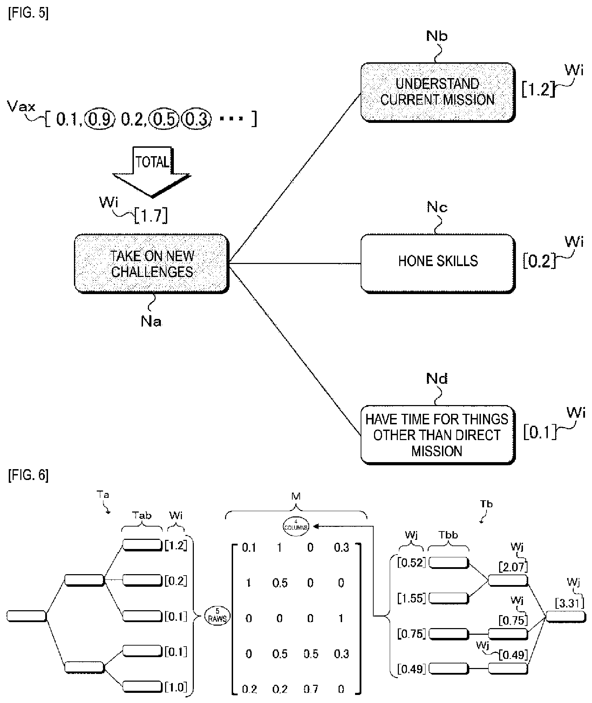

The function of the first allocation unit will be described in detail with reference to FIGS. 4 and 5. Similarly to the above, for convenience of description, four first nodes Na, Nb, Nc, and Nd of the first node group constituting the first tree structure Ta will be used for description.

First, the allocation unit 113 calculates the similarity using the first vector Vx and the second vectors Va, Vb, Vc, and Vd. This similarity can be represented as a third vector that is a sequence of vectors and is preferably calculated using, for example, cosine similarity.

The cosine similarity is one method for evaluating a similarity between two sentences. Specifically, the cosine similarity is a method for evaluating how similar two vectors are, based on a value calculated by dividing a dot product of the two vectors by magnitudes of the two vectors. The calculated value is normalized to a range from -1 to 1, with 1 meaning similar, -1 meaning dissimilar, and 0 meaning neither.

In FIG. 4, [0.1, 0.9, ...] is displayed as a third vector Vax representing a similarity between the first vector Vx and the second vector Va. Similarly, [0.9, 0.3, ...] is displayed as a third vector Vbx representing a similarity between the first vector Vx and the second vector Vb, [0.5, 0.5, ...] is displayed as a third vector Vcx representing a similarity between the first vector Vx and the second vector Vc, and [0.1, 0.1, ...] is displayed as a third vector Vdx representing a similarity between the first vector Vx and the second vector Vd.

Subsequently, the allocation unit 113 calculates first weighting factors for the first nodes Na, Nb, Nc, and Nd, using vectors included in the third vectors Vax, Vbx, Vcx, and Vdx, respectively. The first weighting factor may be obtained, for example, by calculating the total of the n largest vectors included in each of the third vectors Vax, Vbx, Vcx, and Vdx. n can be determined as desired.

In FIG. 5, [1.7] obtained by summing the top three vectors [0.9, 0.5, 0.3] of the vectors [0.1, 0.9, 0.2, 0.5, 0.3, ...] included in the third vector Vax is displayed as a first weighting factor Wi (i is a subscript) of the first node Na. Similarly, [1.2] obtained by summing the top three vectors of the vectors included in the third vector Vbx is displayed as a first weighting factor Wi of the first node Nb, [0.2] obtained by summing the top three vectors of the vectors included in the third vector Vcx is displayed as a first weighting factor Wi of the first node Nc, and [0.1] obtained by summing the top three vectors of the vectors included in the third vector Vdx is displayed as a first weighting factor Wi of the first node Nd.

The allocation unit 113 calculates first weighting factors Wi each corresponding to other first nodes included in the first tree structure Ta in a manner similar to the above. Then, the allocation unit 113 allocates the calculated first weighting factors Wi each to the first nodes used in the respective calculations.

Here, in a hierarchical relationship illustrated in FIG. 5, the lower node that has the highest degree of association (strongest association) with the higher level first node Na is the first node Nb, which has the largest first weighting factor Wi among the first nodes Nb, Nc, and Nd.

### (2-2) Function as Second Allocation Unit:

The function as the second allocation unit is a function of allocating a second weighting factor based on the first weighting factor of each of the nodes located at the lowest level in the first tree structure (hereinafter referred to as "the first lowest level nodes") to each of the second nodes included in the second tree structure, based on a degree of association representing strength of association determined between each of the first lowest level nodes and each of the nodes located at the lowest level in the second tree structure (hereinafter referred to as "the second lowest level nodes"). As the degree of association, it is preferable to use, for example, a propagation matrix described below.

The function of the second allocation unit will be described in detail with reference to FIG. 6.

First, the allocation unit 113 calculates a second weighting factor wj (j is a subscript) of each of second lowest level nodes Tbb using each of the first weighting factors Wi of first lowest level nodes Tab and a propagation matrix M.

The propagation matrix M is a matrix in which the number of nodes of the first lowest level nodes Tab is the number of rows and the number of nodes of the second lowest level nodes Tbb is the number of columns. In FIG. 6, as an example, the propagation matrix M of 5 rows and 4 columns determined based on the number of nodes of the first lowest level nodes Tab, which is 5, and the number of nodes of the second lowest level nodes Tbb, which is 4, is displayed. For each component in the propagation matrix M, it is preferable to set, for example, strength of association (degree of association) between the first lowest level node Tab and the second lowest level node Tbb corresponding to each other in each component.

For this strength of association, for example, a numerical value from 0 to 1 may be set, and in this case, 1 may be the strongest and 0 may be the weakest. By using such a propagation matrix M, the second weighting factors can be determined by a fully connected layer between the first lowest level nodes Tab and the second lowest level nodes Tbb. Note that the second weighting factors may be determined using a structure other than a fully connected layer.

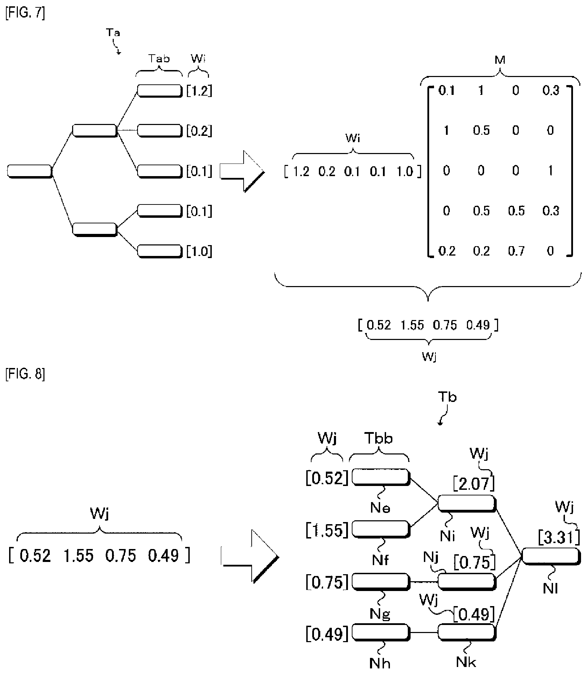

Specifically, as illustrated in FIG. 7, the allocation unit 113 calculates the second weighting factor wj of each of the second lowest level nodes Tbb, based on a row vector [0.52 1.55 0.75 0.49] obtained by multiplying a row vector [1.2 0.2 0.1 0.1 1.0] having the first weighting factors Wi of the respective first lowest level nodes Tab as components, by the propagation matrix M of five rows and four columns.

Subsequently, the allocation unit 113 calculates second weighting factors for the respective second nodes located above the second lowest level nodes Tbb, starting from the lower level, using the calculated second weighting factors wj for the respective second lowest level nodes Tbb. This will be described in detail with reference to FIG. 8.

As illustrated in FIG. 8, the allocation unit 113 allocates a value [2.07] obtained by adding a second weighting factor Wj [0.52] of a second node Ne and a second weighting factor Wj [1.55] of a second node Nf to a second weighting factor Wj of a second node Ni located above the second nodes Ne and Nf. The second nodes Ne and Nf are the second lowest level nodes Tbb.

The allocation unit 113 allocates [0.75], which is a second weighting factor Wj of a second node Ng, to a second weighting factor Wj of a second node Nj located above the second node Ng, and allocates [0.49], which is a second weighting factor Wj of a second node Nh, to a second weighting factor Wj of a second node Nk located above the second node Nh. The second nodes Ng and Nh are the second lowest level nodes Tbb.

Further, the allocation unit 113 allocates a value [3.31] obtained by adding the second weighting factor Wj [2.07] of the second node Ni, the second weighting factor Wj [0.75] of the second node Nj, and the second weighting factor Wj [0.49] of the second node Nk to a second weighting factor Wj of a second node NI, which is located above the second nodes Ni, Nj, and Nk.

Here, when a third tree structure is further provided in addition to the first tree structure and the second tree structure, it is preferable to calculate a third weighting factor of each of third lowest level nodes in a manner similar to that described above, using the second weighting factor Wj of each of the second lowest level nodes Tbb and a propagation matrix determined based on the second tree structure and the third tree structure. The same applies when four or more tree structures are provided.

### Presentation Unit 114

The description returns to FIG. 1. The presentation unit 114 can present at least a portion of the first tree structure Ta, which is composed of the first nodes to which the first weighting factors Wi are allocated by the first allocation unit and the second tree structure Tb, which is composed of the second nodes to which the second weighting factors Wj are allocated by the second allocation unit, as an inference result for the target data Dx for which a solution is proposed.

When presenting the inference result, the inference result may be displayed on a display device, or may be output from a printing device. The display device and the printing device may be provided in the problem solving support device 1, or may be connected to the problem solving support device 1 via a network.

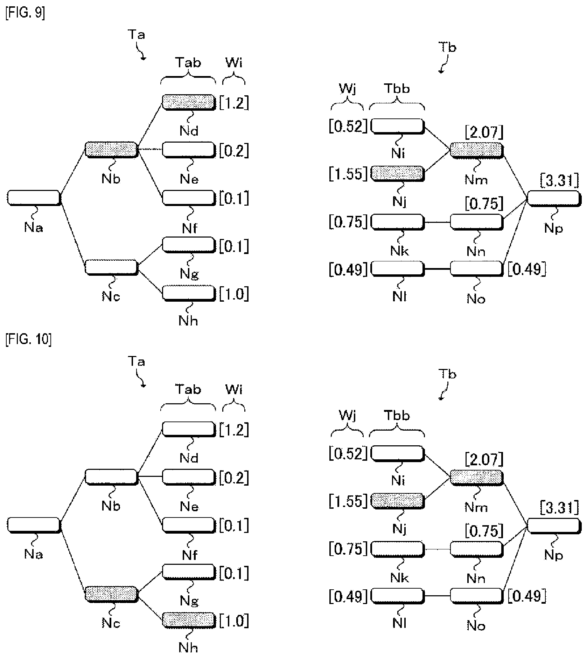

The presentation unit 114 may display the inference result by, for example, displaying the node having the largest weighting factor or weighting factors equal to or greater than a predetermined value for each level in each of the tree structures more prominently than other nodes. To highlight nodes, for example, a background color, a pattern, a character, or the like within a node frame may be changed to something more conspicuous. This will be described in detail with reference to FIG. 9.

In FIG. 9, as the inference result, the first nodes Nb and Nd and the second node Nj and a second node Nm, which have the largest weighting factors in each level among the first nodes constituting the first tree structure Ta and the second nodes constituting the second tree structure Tb, are displayed more prominently than the other nodes.

When presenting the first nodes and the second nodes as the inference result, the presentation unit 114 may present the first node presented as the problem in association with the second node that is in a hierarchical relationship with the second lowest level nodes Tbb that have a high degree of association with the first lowest level nodes Tab that are in a hierarchical relationship with this first node. This will be described in detail with reference to FIG. 10.

FIG. 10 illustrates a case where, for example, when a node corresponding to a problem is the first node Nc, the second nodes Nj and Nm are presented as nodes corresponding to a solution. In this case, the first lowest level nodes Tab that have a hierarchical relationship with the first node Nc corresponding to the problem is the two first nodes Ng and Nh. Of the two first nodes Ng and Nh, the one having the largest weighting factor is the first node Nh, which has a weighting factor of [1.0].

Therefore, among the first nodes constituting the first tree structure Ta corresponding to the problem, the first node Nc and the first node Nh are displayed more prominently than the other nodes. Note that in FIG. 10, the level immediately below the first node Nc is the first lowest level nodes Tab, but when one or more levels are present between the first node Nc and the first lowest level nodes Tab, three or more first nodes on a path connecting the first node Nc and the first node Nh may be displayed more prominently than the other nodes.

On the other hand, the second lowest level nodes Tbb in the second tree structure Tb have four second nodes Ni, Nj, Nk, and NI. Among the four second nodes Ni, Nj, Nk, and NI, the one having the largest weighting factor is the second node Nj having the weighting factor of [1.55]. The second node Nm is located at a level above the second node Nj.

Therefore, among the second nodes constituting the second tree structure Tb corresponding to the solution, the second node Nj and the second node Nm are displayed more prominently than the other nodes. Note that the weighting factors of the four second nodes Ni, Nj, Nk, and NI can be adjusted by changing components in the propagation matrix M.

In this manner, by displaying the first nodes Nc and Nh and the second nodes Nj and Nm more prominently than the other nodes, the solution to the problem can be organized and presented in a hierarchically associated format.

Note that in FIG. 10, when presenting the first nodes and the second nodes as the inference result, the degree of association between the first lowest level nodes Tab and the second lowest level nodes Tbb is used, but the degree of association is not limited thereto. For example, the degree of association between same-level nodes located at the same level in the first tree structure Ta and the second tree structure Tb may be used. Specifically, the first nodes and the second nodes may be presented as the inference result using a degree of association between first nodes at the n-th level in the first tree structure Ta and second nodes at the n-th level in the second tree structure Tb. Here, n in the n-th level is a natural number. The relationship between the levels and n is defined as follows: the highest level is the first level, and the levels toward the lowest level are the second level, the third level, the fourth level, ..., and the n-th level.

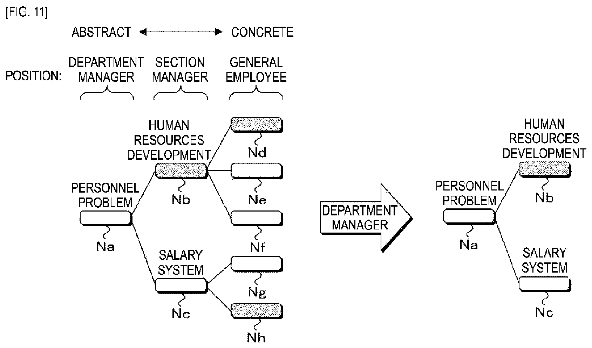

When presenting the first nodes and the second nodes as the inference result, the presentation unit 114 may present the first nodes and the second nodes corresponding to the attribute data received by the reception unit 111, among the first nodes and the second nodes. This will be described in detail with reference to FIG. 11.

FIG. 11 is a schematic diagram illustrating an example of presenting first nodes, based on positions that are attribute data. Each first node has a position set as attribute data. For example, the first node Na at the highest level is set to a position of department manager, the first nodes Nb and Nc at the middle level are set to a position of section manager, and the first nodes Nd, Ne, Nf, Ng, and Nh at the lowest level are set to a position of general employee. The contents stored in the first node at the higher level correspond to the higher position.

For example, when the department manager is specified as a position in FIG. 11, first nodes from the highest level to the lowest level are presented. In this case, it may be possible to freely set which level from the highest level to be presented. In FIG. 11, when the department manager is specified as the position, nodes belonging to two levels of the highest level and the middle level are presented.

It is preferable to set the nodes at respective levels constituting the tree structure so that contents change from abstract to concrete as the level descends in a stepwise manner. Specifically, the most abstract contents are stored in the node at the highest level, intermediate contents are stored in the nodes at the middle level, and the most concrete contents are stored in the nodes at the lowest level.

Nodes in a hierarchical relationship have a function similar to clustering labels, and nodes having similar contents are subordinate to nodes at a higher level.

### Operation of Problem Solving Support Device

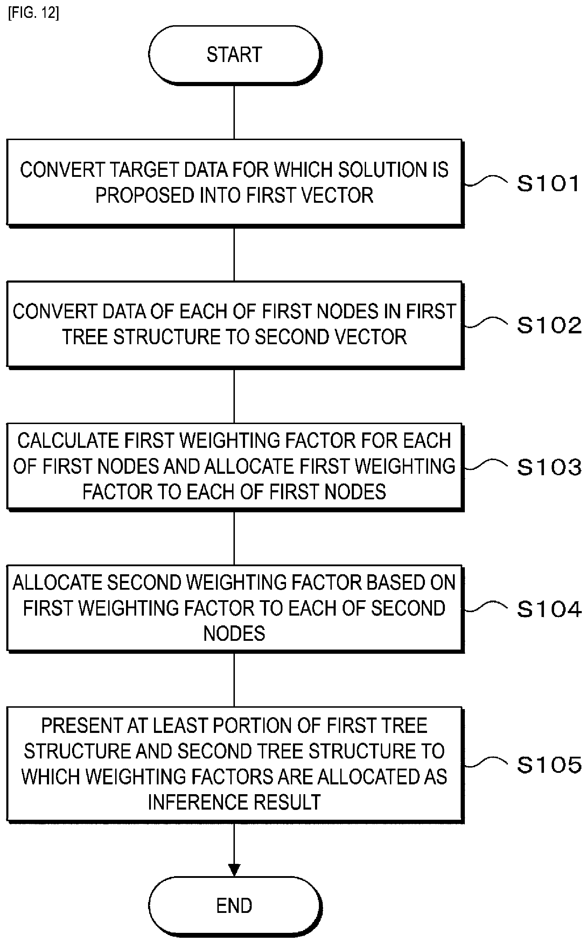

With reference to FIG. 12, an example of operation of the problem solving support device 1 according to the embodiment will be described.

First, the vector conversion unit 112 of the problem solving support device 1 converts the target data Dx for which a solution is proposed into a first vector that is a sequence of vectors (step S101).

Subsequently, the vector conversion unit 112 of the problem solving support device 1 converts the data stored in each of the first nodes constituting the first tree structure Ta into a second vector that is a sequence of vectors (step S102).

Subsequently, the allocation unit 113 of the problem solving support device 1 compares each of the first nodes included in the first tree structure Ta with the target data Dx, calculates the first weighting factor Wi based on the similarity with the target data Dx for each of the first nodes, and allocates the calculated first weighting factor Wi to the first node used for the calculation (step S103).

Subsequently, the allocation unit 113 of the problem solving support device 1 allocates the second weighting factor Wj, based on the first weighting factor Wi of the first lowest level node to each of the second nodes included in the second tree structure Tb based on the degree of association determined between each of the first lowest level nodes and each of the second lowest level nodes (step S104).

Subsequently, the presentation unit 114 of the problem solving support device 1 presents at least a portion of the first tree structure Ta, which is composed of the first nodes to which the first weighting factors Wi are allocated in step S103 and the second tree structure Tb, which is composed of the second nodes to which the second weighting factors Wj are allocated in step S104, as an inference result indicating a solution to the target data Dx for which a solution is proposed (step S105).

As described above, according to the problem solving support device 1 according to the embodiment, each of the first nodes in the first tree structure Ta related to the problem is compared with the target data Dx for which a solution is proposed, the first weighting factor Wi based on the similarity with the target data Dx is allocated to each of the first nodes, and the second weighting factor Wj based on the first weighting factor Wi is allocated to each of the second nodes in the second tree structure Tb, based on the degree of association between the lowest level nodes in the first tree structure Ta and the second tree structure Tb related to the solution.

This enables to allocate weighting factors based on the similarity with the target data Dx for which a solution is proposed to the respective nodes in the problem solving structure composed of the first tree structure Ta and the second tree structure Tb, identify nodes having a high degree of association with the target data Dx from the problem solving structure, and propose the nodes as a solution.

Therefore, according to the problem solving support device 1 according to the embodiment, it is possible to propose a purposeful solution to a client problem.

Note that the present invention is not limited to the above-described embodiment, and can be implemented in various other forms without departing from the gist of the present invention. Therefore, the above embodiment is merely illustrative in all respects and is not to be interpreted as limiting. For example, the order of the processing steps described above can be changed as desired or the processing steps can be executed in parallel as long as no contradiction occurs in the processing contents.

### Supplement

Aspects of the present embodiment include the following disclosures.

### Supplementary Note 1

A problem solving support device (1) including a storage unit (12) configured to store at least a first tree structure composed of a plurality of first nodes storing data related to a problem and a second tree structure composed of a plurality of second nodes storing data related to a solution, a first allocation unit (113) configured to compare each of the plurality of first nodes included in the first tree structure with target data, calculate a first weighting factor based on a similarity with the target data for each of the plurality of first nodes, and allocate the first weighting factor calculated to the corresponding one of the plurality of first nodes, and a second allocation unit (113) configured to allocate a second weighting factor based on the first weighting factor to each of the plurality of second nodes included in the second tree structure, based on a degree of association representing strength of association determined between same-level nodes located at the same level in the first tree structure and the second tree structure.

### Supplementary Note 2

The problem solving support device (1) according to Supplementary Note 1, in which the second allocation unit (113) allocates the second weighting factor based on the first weighting factor to each of the plurality of second nodes included in the second tree structure, based on a degree of association representing strength of association determined between each of the first lowest level nodes located at the lowest level in the first tree structure and each of the second lowest level nodes located at the lowest level in the second tree structure.

### Supplementary Note 3

The problem solving support device (1) according to Supplementary Note 1 or 2, in which the second allocation unit (113) calculates the second weighting factor for each of the same-level nodes in the second tree structure using the degree of association, and calculates the second weighting factor sequentially from a lower level for each of the plurality of second nodes located above the same-level nodes in the second tree structure using the second weighting factor calculated.

### Supplementary Note 4

The problem solving support device (1) according to any one of Supplementary Notes 1 to 3, further including a first vector conversion unit (112) configured to convert the target data into a first vector being a sequence of vectors, and a second vector conversion unit (112) configured to convert data stored in each of the plurality of first nodes into a second vector being a sequence of vectors, in which the first allocation unit (113) calculates the similarity using the first vector and the second vector.

### Supplementary Note 5

The problem solving support device (1) according to Supplementary Note 4, in which the similarity is represented by a third vector being a sequence of vectors, and the first allocation unit (113) calculates the first weighting factor using a vector included in the third vector.

### Supplementary Note 6

The problem solving support device (1) according to any one of Supplementary Notes 1 to 5, further including a presentation unit (114) configured to present at least a portion of the first tree structure composed of the plurality of first nodes, each of the plurality of first nodes having the first weighting factor allocated by the first allocation unit (113), and the second tree structure composed of the plurality of second nodes, each of the plurality of second nodes having the second weighting factor allocated by the second allocation unit (113), as an inference result for the target data.

### Supplementary Note 7

The problem solving support device (1) according to Supplementary Note 6, in which each of the plurality of first nodes and each of the plurality of second nodes further include attribute data representing attributes of data to be stored, the problem solving support device (1) further including a reception unit (111) configured to receive input of the attribute data, in which the presentation unit (114) presents the first node and the second node corresponding to the attribute data input among the plurality of first nodes and the plurality of second nodes, as the inference result.

### Supplementary Note 8

The problem solving support device (1) according to Supplementary Note 6, in which when presenting the first node and the second node as the inference result, the presentation unit (114) presents the first node to be presented in association with the second node being in a hierarchical relationship with the same-level nodes in the second tree structure that have the degree of association, that is high, with the same-level nodes in the first tree structure that are in a hierarchical relationship with the first node.

### Supplementary Note 9

The problem solving support device (1) according to any one of Supplementary Notes 1 to 8, in which the second allocation unit (113) uses a fully connected layer when calculating the second weighting factor by associating each of the same-level nodes in the first tree structure with each of the same-level nodes in the second tree structure.

### Supplementary Note 10

A problem solving support method executed by a processor (11), including storing at least a first tree structure composed of a plurality of first nodes storing data related to a problem and a second tree structure composed of a plurality of second nodes storing data related to a solution, comparing each of the plurality of first nodes included in the first tree structure with target data, calculating a first weighting factor based on a similarity with the target data for each of the plurality of first nodes, and allocating the first weighting factor calculated to the corresponding one of the plurality of first nodes, and allocating a second weighting factor based on the first weighting factor to each of the plurality of second nodes included in the second tree structure, based on a degree of association representing strength of association determined between same-level nodes located at the same level in the first tree structure and the second tree structure.

### REFERENCE SIGNS

1 Problem solving support device, 11 Processor, 12 Storage device, 13 Communication interface, 111 Reception unit, 112 Vector conversion unit, 113 Allocation unit, 114 Presentation unit, 121 Program, 122 Data

## Claims

1. A problem solving support device (1) comprising:
a storage unit configured to store at least a first tree structure composed of a plurality of first nodes storing data related to a problem and a second tree structure composed of a plurality of second nodes storing data related to a solution;
a first allocation unit (113) configured to compare each of the plurality of first nodes included in the first tree structure with target data, calculate a first weighting factor based on a similarity with the target data for each of the plurality of first nodes, and allocate the first weighting factor calculated to the corresponding one of the plurality of first nodes; and
a second allocation unit (113) configured to allocate a second weighting factor based on the first weighting factor to each of the plurality of second nodes included in the second tree structure, based on a degree of association representing strength of association determined between same-level nodes located at the same level in the first tree structure and the second tree structure.

2. The problem solving support device (1) according to claim 1, wherein
the second allocation unit (113) allocates the second weighting factor based on the first weighting factor to each of the plurality of second nodes included in the second tree structure, based on a degree of association representing strength of association determined between each of the first lowest level nodes located at the lowest level in the first tree structure and each of the second lowest level nodes located at the lowest level in the second tree structure.

3. The problem solving support device (1) according to claim 1, wherein
the second allocation unit (113) calculates the second weighting factor for each of the same-level nodes in the second tree structure using the degree of association, and calculates the second weighting factor sequentially from a lower level for each of the plurality of second nodes located above the same-level nodes in the second tree structure using the second weighting factor calculated.

4. The problem solving support device (1) according to claim 1, further comprising:
a first vector conversion unit (112) configured to convert the target data into a first vector being a sequence of vectors; and
a second vector conversion unit (112) configured to convert data stored in each of the plurality of first nodes into a second vector being a sequence of vectors, wherein
the first allocation unit (113) calculates the similarity using the first vector and the second vector.

5. The problem solving support device (1) according to claim 4, wherein
the similarity is represented by a third vector being a sequence of vectors, and
the first allocation unit (113) calculates the first weighting factor using a vector included in the third vector.

6. The problem solving support device (1) according to claim 1, further comprising:
a presentation unit (114) configured to present at least a portion of the first tree structure composed of the plurality of first nodes, each of the plurality of first nodes having the first weighting factor allocated by the first allocation unit (113), and the second tree structure composed of the plurality of second nodes, each of the plurality of second nodes having the second weighting factor allocated by the second allocation unit (113), as an inference result for the target data.

7. The problem solving support device (1) according to claim 6, wherein
each of the plurality of first nodes and each of the plurality of second nodes further include attribute data representing attributes of data to be stored, the problem solving support device (1) further comprising:
a reception unit (111) configured to receive input of the attribute data, wherein
the presentation unit (114) presents the first node and the second node corresponding to the attribute data input among the plurality of first nodes and the plurality of second nodes, as the inference result.

8. The problem solving support device (1) according to claim 6, wherein
when presenting the first node and the second node as the inference result, the presentation unit (114) presents the first node to be presented in association with the second node being in a hierarchical relationship with the same-level nodes in the second tree structure that have the degree of association, that is high, with the same-level nodes in the first tree structure that are in a hierarchical relationship with the first node.

9. The problem solving support device (1) according to claim 1, wherein,
the second allocation unit (113) uses a fully connected layer when calculating the second weighting factor by associating each of the same-level nodes in the first tree structure with each of the same-level nodes in the second tree structure.

10. A problem solving support method executed by a processor (11), the method comprising:
storing at least a first tree structure composed of a plurality of first nodes storing data related to a problem and a second tree structure composed of a plurality of second nodes storing data related to a solution;
comparing each of the plurality of first nodes included in the first tree structure with target data, calculating a first weighting factor based on a similarity with the target data for each of the plurality of first nodes, and allocating the first weighting factor calculated to the corresponding one of the plurality of first nodes; and
allocating a second weighting factor based on the first weighting factor to each of the plurality of second nodes included in the second tree structure, based on a degree of association representing strength of association determined between same-level nodes located at the same level in the first tree structure and the second tree structure.
